# EUROPEAN PATENT SPECIFICATION

(11) **EP 1 833 227 B1**
(45) Date of publication and mention of the grant of the patent: **28.11.2012**
(21) Application number: 07103571.1
(22) Date of filing: 06.03.2007
(51) Int. Cl.: H04L 29/06, G08B 25/00

(54) **Intrusion detection in an IP connected security system**
Eindringungserkennung in einem IP-verbundenen Sicherheitssystem
Détection d'intrusion dans un système de sécurité connecté IP

(30) Priority: 09.03.2006 US 781349 P; 24.04.2006 US 409877
(43) Date of publication of application: 12.09.2007
(73) Proprietor: Honeywell International Inc., Morristown, NJ 07960 (US)
(72) Inventor: Addy, Kenneth L, Massapequa, NY 11758 (US)
(74) Representative: Houghton, Mark Phillip

(56) References cited:
- FR-A1- 2 830 703
- US-A1- 2003 142 794
- US-A1- 2004 148 520
- US-A1- 2005 134 450
- US-A1- 2005 242 945
- ROESCH M: "Snort - lightweight intrusion detection for networks", PROCEEDINGS OF THE SYSTEMS ADMINISTRATION CONFERENCE. LISA, XX, XX, 7 November 1999 (1999-11-07), pages 229-238, XP002375913,

## Description

### Field of the Invention

The invention relates to residential and commercial security systems, and more particularly to an intrusion detection in an IP connected security system.

### Discussion of the Prior Art

Many modern residential and commercial security systems are connected to a central monitoring station via the internet or an intranet. The advantages of such a setup are many. The use of internet protocol (IP) packetized data for transmitting status and updates to and from the security system allows for routine updates to the system. Also, fully digital sensors can be added incrementally to the system without compromising the existing infrastructure. Operators can also match many wired and wireless components onto the system without compromising the integrity of the system. Other security systems, such as the one described in FR-A-2,830,703, are connected to a central control via wireless and wired telecommunications networks.

However, with the advantages of a IP-connected security system are a host of disadvantages. Some of those disadvantages stem from having a security system occupy a node on the Internet. In order to receive and transmit IP packets, the security system will have an IP address and a gateway router associated with the address. It is fairly easy to find an IP address and attack the IP address using a variety of attacks to shut down the IP address. These attacks can be engineered by criminals hoping to compromise the security system, disgruntled employees, hackers and competitors. As security systems expand to take on more duties (including surveillance, facility access control, etc.), the disabling of a security system by an Internet attack can have dire consequences. Furthermore, since IP attacks at security system IP addresses can frequently go unnoticed at the facility, the attacks can pose even bigger threats to security systems which protect the physical premises.

### SUMMARY OF THE INVENTION

The present invention provides a device and method for detecting and responding to an IP intrusion in a security system as respectively defined in claims 1 and 7. An intrusion detection device is coupled to primary and secondary communication devices of a security system so that when a Internet attack is detected, communication between the security system and a central monitoring station occurs over the secondary communication device rather than the primary communication device. The invention preserves communication between the security system and the central monitoring station even when a denial of service type attack is occurring so that physical premise security is uncompromised.

### BRIEF DESCRIPTION OF THE DRAWINGS

The foregoing objects and advantages of the present invention for intrusion detection in a IP connected security system may be more readily understood by one skilled in the art with reference being had to the following detailed description of several embodiments thereof, taken in conjunction with the accompanying drawings in which:

FIG. 1 is a schematic diagram of a prior art security system;

FIG. 2 is a schematic diagram of a security system in accordance with one embodiment of the invention; and

FIG. 3 is a flowchart diagram of the steps taken at the security system to detect intrusions.

### DETAILED DESCRIPTION OF THE INVENTION

Reference will now be made in detail to embodiments of the invention, examples of which are illustrated in the accompanying drawings. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, the present invention may be practiced without those specific details. In other instances, well known methods, procedures, components and circuits have not been described in detail as not to unnecessarily obscure aspects of the present invention.

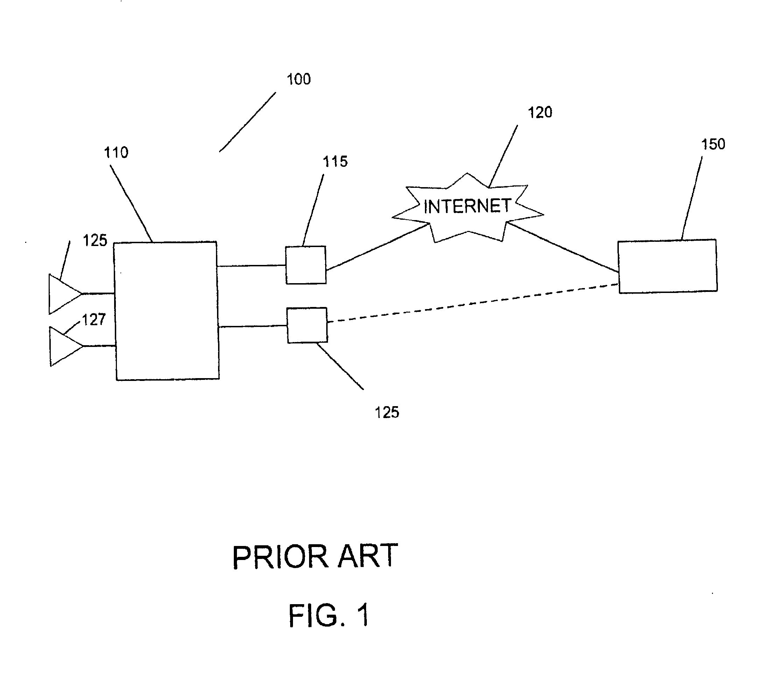

Referring to FIG. 1, there is shown a schematic diagram of a typical residential or commercial security system 100. Security system 100 may include a control panel 110 which may use proprietary buses and separate wiring and cables within a building to communicate with a variety of sensors 125 and 127. The sensors 125, 127 may be, for example, radio frequency motion sensors, cameras, alarm reporting devices, or the like, which generally report intrusions or sense emergencies in the building to the control panel. The control panel 110 typically houses a display means for displaying the status of the various sensors and for alerting local facility managers and residents if a physical security breach or emergency has occurred. The control panel also may contain means for resetting sensors and running diagnostics on the sensors.

The control panel is coupled to IP communication device 115 which connects the security system to a central monitoring station 150. It will be understood that the IP communication device may be hubs, switches or routers which enable communication through messages compliant with Internet Protocol. The IP communication device 115 communicates to the central monitoring station 150 through the Internet 120. The central monitoring station 150 may maintain contact with the control panel 110 so that the status of the system is kept up to date at the central monitoring station.

The security system 100 has a secondary communication device 125 for providing communication to the central monitoring station 150 when the primary method of communication is unavailable. Such secondary communication device 125 may be, for example, a GSM dialer configured to communicate wirelessly to the central monitoring station. Such back-up communication equipment 125 may be a telephone modem configured for communicating with the central monitoring station 150 through plain old telephone service (POTS) lines. Although the back-up communication equipment 125 is illustrated as a separate component, it may be integrated within the control panel 110.

Generally, concurrent with the rise in connectivity among diverse computer networks and the corresponding increase in dependence on networked information systems, there has been a dramatic increase in the need for robust security to enforce restrictions on access to and prevent intrusion on security systems. The topology of the interconnected networks has also grown increasingly complex, and often involves open networks such as the internet or the extranet that expose security systems to increased threats of attack. No single solution has yet been proposed that addresses the current needs for intrusion detection and response for a security system. Additionally, the intrusion detection and response of a security system must be cognizant of the special needs of a security system.

For instance, a security system at a residential or commercial facility may not be monitored by facility personnel on a regular basis. Since most of the control panel data is transmitted and received at a central monitoring station, facility personnel may not actively manage the control panel, instead, only paying heed when a local alarm or alert is raised by the security system. Further, unlike when a website is attacked by a coordinated Internet attacks and the operator of the website chooses just to disable the website until the attack is ended, an Internet attack at a security system may be part of a coordinated attack in conjunction with a physical attack on the facility. Therefore, it is especially important that communication with the central monitoring station is maintained during an Internet attack.

The present invention contemplates an intrusion detection device which monitors Internet traffic and, if certain conditions are met, disables the primary connection to the central monitoring station so that secondary communication is established.

Methods used by intruders to gain unauthorized access to computer networks evolve in sophistication in lock step with advances in security technology. It is typical, however, that successful attacks on network systems often begin by attacking the security subsystems in place on the target network that are responsible for detecting common intrusion signatures, disabling those systems and destroying evidence of the intrusion. Such attacks include a "denial-of-service" attack, which is an attack on a computer system or network that causes a loss of service to users, typically the loss of network connectivity and services by consuming the bandwidth of the victim network or overloading the computational resources of the victim system. A "smurf" attack is a "denial-of-service" attack, which uses spoofed broadcast IP messages to flood a target system. A "banana" attack involves redirecting outgoing messages from the network back onto the network, preventing outside access, as well as flooding the client with the sent packets.

Attempts to gain unauthorized access to computer networks capitalize on inherent loopholes in a network's security topology. It is known, for example, that weaknesses in individual security components are often sought out and successfully exploited. The rapid introduction of new technology exacerbates the problem, creating or exposing additional weaknesses that may not become known even after a breach in security has already occurred. Some currently available intrusion tools allow an intruder to evade detection by intrusion detection systems.

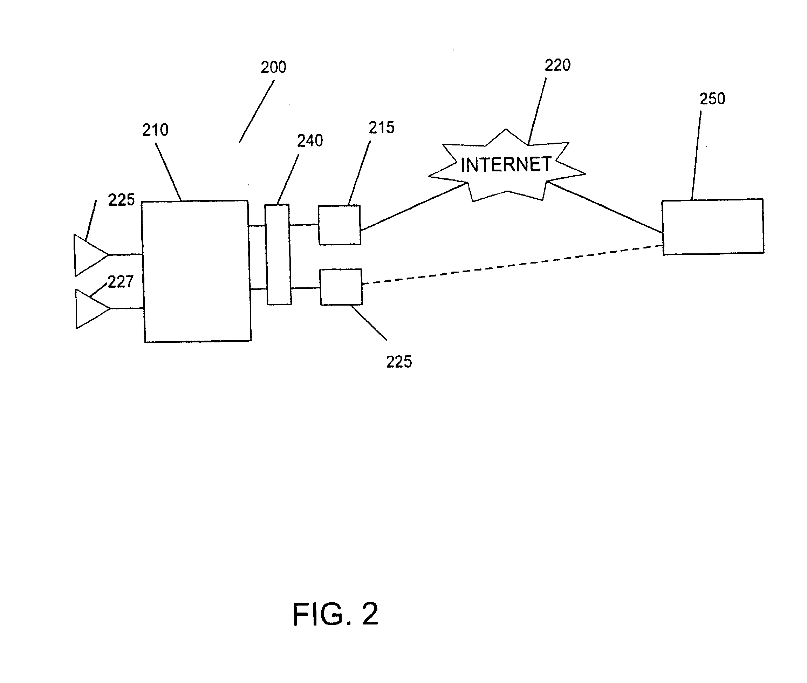

Referring now to FIG. 2, there is shown a schematic diagram of a security system 200 in accordance with one embodiment of the invention. Security system 200 includes a control panel 210, which uses proprietary buses and separate wiring and cables within a building to communicate with a variety of sensors 229 and 227. The sensors 229, 227 may be, for example, radio frequency motion sensors, cameras, alarm reporting devices, or the like, which generally report intrusions or sense emergencies in the building to the control panel. The control panel 210 houses a display means (not shown) for displaying the status of the various sensors and for alerting local facility managers and residents if a physical security breach or emergency has occurred. The control panel also may contain means for resetting sensors and running diagnostics on the sensors.

The control panel is coupled to an intrusion detection device 240, which is further coupled to IP communication device 215. The IP communication device may be hubs, switches or routers, which enable communication through messages compliant with Internet Protocol. In one embodiment, the IP communication device 215 is a gateway router for directing data traffic onto and from the Internet. The IP communication device 215 communicates to the central monitoring station 150 through the Internet 220. The central monitoring station 250 may maintain contact with the control panel 210 so that the status of the system is kept up to date at the central monitoring station.

The security system 200 includes a secondary communication device 225 for providing communication to the central monitoring station 250 when the primary method of communication is unavailable. The secondary communication device is also coupled to the intrusion detection device 240. Such secondary communication device 225 may be, for example, a GSM dialer configured to communicate wirelessly to the central monitoring station. Such back-up communication equipment 225 may be a telephone modem configured for communicating with the central monitoring station 250 through POTS lines. Although the back-up communication equipment 225 is illustrated as a separate component, it may be integrated within the control panel 210.

The intrusion detection device 240 may include a firewall for controlling access to the security system. The firewall is configurable and serves to control access by hosts on the Internet to resources on the network. This protects the security system from intruders outside the firewall by essentially filtering out packets of information transmitted over the Internet. The intrusion detection device 240 further includes a packet sensor, which reads packets passing through the firewall, and looks for inherent signatures of an Internet attack.

Preferably, the intrusion detection device is embedded in the control panel as a software package and implemented on computers comprising at least a master system and the security subsystem. In another embodiment, the intrusion detection device is implemented in firmware and loaded into a processing unit associated with the control panel. This allows for updates by the central monitoring station as signatures for new types of attacks are discovered.

During operation, the intrusion detection device 240 monitors the message activity at the security system. All outgoing and incoming message packets are examined at the intrusion detection device. The intrusion detection device examines individual packets and gathers data related to the originating IP address of each message. If, for instance, bursts of data messages from one specific IP address are directed to the security system, a denial-of-service type attack may be occurring. In another instance, if the burst of data traffic is outside the statistical range of normal data traffic for the security system, a denial-of-service attack from spoofed IP addresses may be occurring.

A host of factors related to the security system, including vulnerability, visibility of the target, data traffic capacity, time of day, and other factors may figure into how the intrusion detection device handles anomalous data message activity at the security system. These factors can be coded into the software or firmware implementation of the intrusion detection device so that trigger levels for raising an alarm or alert can be modified.

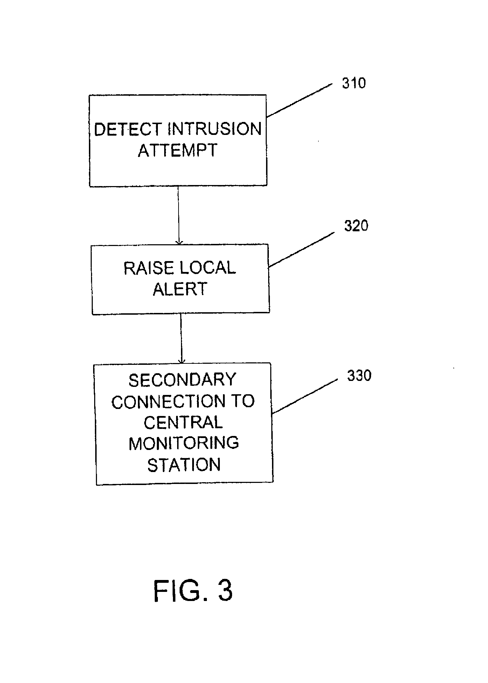

Referring now to FIG. 3, there is shown the steps involved in a method of intrusion detection for a security system. In step 310, an intrusion attempt is detected at the intrusion detection device. For instance, if the intrusion detection device detects a certain data traffic over a predefined trigger number, the intrusion detection device logs the event as an intrusion attempt. In step 320, the intrusion detection device raises a local alert at the control panel. The control panel has a display means, which alerts local facility personnel of an intrusion attempt. This may be accomplished by means of a warning displayed on the display means of the control panel. In step 330, the intrusion detection device enables the secondary communication device for communications to and from the central monitoring station. The intrusion detection device may also disable the primary communication device so that data message traffic over the primary communication device is ignored.

## Claims

1. A security system (200) comprising:
a control panel (210);
sensors (227, 229) electrically coupled to said control panel;
an Internet protocol communication device (215) for transmitting and receiving data to a central monitoring station (250) via the Internet;
a secondary communication device (225) for transmitting and receiving data to the central monitoring station (250) on a secondary connection;
**characterised by**:
an intrusion detection device (240) coupled to said control panel and coupled to the Internet protocol communication device (215) and the secondary communication device (225), wherein the intrusion detection device is adapted to detect intrusions from external Internet hosts via a packet sensor adapted to read packets of information passing through the intrusion detection device (240) and identify signatures of an attack from the Internet, and wherein said intrusion detection device (240), upon detection of an intrusion is adapted to switch communication to said secondary communication device (225) on the secondary connection.

2. The security system of claim 1, wherein said intrusion detection device (240) includes a firewall.

3. The security system of claim 1 or claim 2, wherein said Internet protocol communication device (215) is one of a gateway router, a hub, and a switch.

4. The security system of any of the preceding claims, wherein said control panel (210) includes a display means.

5. The security system of claim 4, wherein said display means includes means for displaying a local alert.

6. The security system of any of the preceding claims, wherein said secondary communication device (225) is one of a wireless dialer, and a telephone modem.

7. A method of detecting intrusions to a security system (200) from external Internet hosts, said security system (200) including a control panel (210); sensors (227, 229) electrically coupled to said control panel; an Internet protocol communication device (215) coupled to said control panel for transmitting and receiving data to a central monitoring station (250) via the Internet; a secondary communication device (225) for transmitting and receiving data to the central monitoring station (250) on a secondary connection;
**characterised by**:
an intrusion detection device (240) coupled to said control panel (210) and coupled to the Internet protocol communication device (215) and adapted to detect intrusions from external Internet hosts, said method comprising the steps of :
at the intrusion detection device reading packets of information passing through the intrusion detection device and identifying signatures of an attack from the Internet;
raising a local alert on said control panel (210) upon detection of an intrusion; and
switching communication to said second communication device (225) on the secondary connection when an intrusion has been detected.

8. The method of claim 7, further comprising the step of disabling communication to said Internet protocol communication device (215).

9. The method of claim 7 or claim 8, wherein said intrusion detection device (240) includes a firewall.

10. The method of any of claims 7 to 9, wherein said Internet protocol communication device (215) is one of a gateway router, a hub, and a switch.

11. The method of any of claims 7 to 10, wherein said control panel (210) includes a display means.

12. The method of claim 11, wherein said local alert is displayed at said display means.

13. The method of any of claims 7 to 12, wherein said secondary communication device (225) is one of a wireless dialer, and a telephone modem.

## Patentansprüche

1. Sicherheitssystem (200), das Folgendes umfasst:
ein Bedienfeld (210);
Sensoren (227, 229), die mit dem Bedienfeld elektrisch gekoppelt sind;
eine Internetprotokoll-Kommunikationsvorrichtung (215) zum Senden und Empfangen von Daten zu bzw. von einer zentralen Überwachungsstation (250) über das Internet;
eine sekundäre Kommunikationsvorrichtung (225) zum Senden und Empfangen von Daten zu bzw. von der zentralen Überwachungsstation (250) auf einer sekundären Verbindung;
**gekennzeichnet durch**:
eine Eindringungsdetektionsvorrichtung (240), die mit dem Bedienfeld gekoppelt ist und mit der Internetprotokoll-Kommunikationsvorrichtung (215) und der sekundären Kommunikationsvorrichtung (225) gekoppelt ist, wobei die Eindringungsdetektionsvorrichtung dazu ausgelegt ist, Eindringungen von externen Internet-Hosts über einen Paketsensor zu detektieren, der dazu ausgelegt ist, Pakete von Informationen, die **durch** die Eindringungsdetektionsvorrichtung (240) laufen, zu lesen und Signaturen eines Angriffs aus dem Internet zu identifizieren, und wobei die Eindringungsdetektionsvorrichtung (240) bei der Detektion einer Eindringung dazu ausgelegt ist, die Kommunikation zur sekundären Kommunikationsvorrichtung (225) auf der sekundären Verbindung umzuschalten.

2. Sicherheitssystem nach Anspruch 1, wobei die Eindringungsdetektionsvorrichtung (240) eine Firewall umfasst.

3. Sicherheitssystem nach Anspruch 1 oder Anspruch 2, wobei die Internetprotokoll-Kommunikationsvorrichtung (215) entweder ein Gateway-Router, ein Netzknoten oder ein Verteiler ist.

4. Sicherheitssystem nach einem der vorangehenden Ansprüche, wobei das Bedienfeld (210) ein Anzeigemittel umfasst.

5. Sicherheitssystem nach Anspruch 4, wobei das Anzeigemittel ein Mittel zum Anzeigen eines lokalen Alarms umfasst.

6. Sicherheitssystem nach einem der vorangehenden Ansprüche, wobei die sekundäre Kommunikationsvorrichtung (225) entweder eine drahtlose Wählvorrichtung oder ein Telefonmodem ist.

7. Verfahren zum Detektieren von Eindringungen von externen Internet-Hosts in ein Sicherheitssystem (200), wobei das Sicherheitssystem (200) ein Bedienfeld (210); Sensoren (227, 229), die mit dem Bedienfeld elektrisch gekoppelt sind; eine Internetprotokoll-Kommunikationsvorrichtung (215), die mit dem Bedienfeld gekoppelt ist, zum Senden und Empfangen von Daten zu bzw. von einer zentralen Überwachungsstation (250) über das Internet; eine sekundäre Kommunikationsvorrichtung (225) zum Senden und Empfangen von Daten zu bzw. von der zentralen Überwachungsstation (250) auf einer sekundären Verbindung umfasst;
**gekennzeichnet durch**:
eine Eindringungsdetektionsvorrichtung (240), die mit dem Bedienfeld (210) gekoppelt ist und mit der Internetprotokoll-Kommunikationsvorrichtung (215) gekoppelt ist und dazu ausgelegt ist, Eindringungen von externen Internet-Hosts zu detektieren, wobei das Verfahren die folgenden Schritte umfasst:
an der Eindringungsdetektionsvorrichtung Lesen von Paketen von Informationen, die **durch** die Eindringungsdetektionsvorrichtung laufen, und Identifizieren von Signaturen eines Angriffs aus dem Internet;
Auslösen eines lokalen Alarms an dem Bedienfeld (210) bei der Detektion einer Eindringung; und
Umschalten der Kommunikation zur zweiten Kommunikationsvorrichtung (225) auf der sekundären Verbindung, wenn eine Eindringung detektiert wurde.

8. Verfahren nach Anspruch 7, das ferner den Schritt des Sperrens der Kommunikation mit der Internetprotokoll-Kommunikationsvorrichtung (215) umfasst.

9. Verfahren nach Anspruch 7 oder Anspruch 8, wobei die Eindringungsdetektionsvorrichtung (240) eine Firewall umfasst.

10. Verfahren nach einem der Ansprüche 7 bis 9, wobei die Internetprotokoll-Kommunikationsvorrichtung (215) entweder ein Gateway-Router, ein Netzknoten oder ein Verteiler ist.

11. Verfahren nach einem der Ansprüche 7 bis 10, wobei das Bedienfeld (210) ein Anzeigemittel umfasst.

12. Verfahren nach Anspruch 11, wobei der lokale Alarm am Anzeigemittel angezeigt wird.

13. Verfahren nach einem der Ansprüche 7 bis 12, wobei die sekundäre Kommunikationsvorrichtung (225) entweder eine drahtlose Wählvorrichtung oder ein Telefonmodem ist.

## Revendications

1. Système de sécurité (200) comprenant :
un panneau de commande (210) ;
des détecteurs (227, 229) couplés électriquement audit panneau de commande ;
un dispositif de communication par protocole Internet (215) pour transmettre et recevoir des données au niveau d'un poste central de surveillance (250) via Internet ;
un dispositif de communication secondaire (225) pour transmettre et recevoir des données au niveau du poste central de surveillance (250) sur une connexion secondaire ;
**caractérisé par** :
un dispositif de détection d'intrusion (240) couplé audit panneau de commande et couplé au dispositif de communication par protocole Internet (215) et au dispositif de communication secondaire (225), où le dispositif de détection d'intrusion est conçu pour détecter des intrusions provenant d'hôtes Internet externes via un détecteur de paquets conçu pour lire des paquets d'informations traversant le dispositif de détection d'intrusion (240) et identifier des signatures d'une attaque provenant d'Internet, et où ledit dispositif de détection d'intrusion (240), lors de la détection d'une intrusion, est conçu pour commuter la communication vers ledit dispositif de communication secondaire (225) sur la connexion secondaire.

2. Système de sécurité selon la revendication 1, dans lequel ledit dispositif de détection d'intrusion (240) comprend un pare-feu.

3. Système de sécurité selon la revendication 1 ou la revendication 2, dans lequel ledit dispositif de communication par protocole Internet (215) est un dispositif parmi un routeur de passerelle, un concentrateur et un commutateur.

4. Système de sécurité selon l'une quelconque des revendications précédentes, dans lequel ledit panneau de commande (210) comprend un moyen d'affichage.

5. Système de sécurité selon la revendication 4, dans lequel ledit moyen d'affichage comprend un moyen pour afficher une alerte locale.

6. Système de sécurité selon l'une quelconque des revendications précédentes, dans lequel ledit dispositif de communication secondaire (225) est soit un composeur sans fil, soit un modem téléphonique.

7. Procédé de détection d'intrusion dans un système de sécurité (200) provenant d'hôtes Internet externes, ledit système de sécurité (200) comprenant un panneau de commande (210) ; des détecteurs (227, 229) couplés électriquement audit panneau de commande ; un dispositif de communication par protocole Internet (215) couplé audit panneau de commande pour transmettre et recevoir des données au niveau d'un poste central de surveillance (250) via Internet ; un dispositif de communication secondaire (225) pour transmettre et recevoir des données au niveau du poste central de surveillance (250) sur une connexion secondaire ; **caractérisé par** :
un dispositif de détection d'intrusion (240) couplé audit panneau de commande (210) et couplé au dispositif de communication par protocole Internet (215) et conçu pour détecter des intrusions provenant d'hôtes Internet externes, ledit procédé comprenant les étapes suivantes :
au niveau du dispositif de détection d'intrusion, lire des paquets d'informations traversant le dispositif de détection d'intrusion, et identifier des signatures d'une attaque provenant d'Internet ;
activer une alerte locale sur ledit panneau de commande (210) lors de la détection d'une intrusion ; et commuter la communication vers ledit second dispositif de communication (225) sur la connexion secondaire lorsqu'une intrusion a été détectée.

8. Procédé selon la revendication 7, comprenant en outre l'étape comprenant de désactiver la communication vers ledit dispositif de communication par protocole Internet (215).

9. Procédé selon la revendication 7 ou la revendication 8, dans lequel ledit dispositif de détection d'intrusion (240) comprend un pare-feu.

10. Procédé selon l'une quelconque des revendications 7 à 9, dans lequel ledit dispositif de communication par protocole Internet (215) est un dispositif parmi un routeur de passerelle, un concentrateur et un commutateur.

11. Procédé selon l'une quelconque des revendications 7 à 10, dans lequel ledit panneau de commande (210) comprend un moyen d'affichage.

12. Procédé selon la revendication 11, dans lequel ladite alerte locale est affichée au niveau dudit moyen d'affichage.

13. Procédé selon l'une quelconque des revendications 7 à 12, dans lequel ledit dispositif de communication secondaire (225) est soit un composeur sans fil, soit un modem téléphonique.
